Europäisches Patentamt

European Patent Office

Office européen des brevets

(11) Publication number: **0 272 875 B1**

# EUROPEAN PATENT SPECIFICATION

(45) Date of publication of patent specification: **25.11.92** (51) Int. Cl.5: **G11B 7/26**, G06K 19/08

(21) Application number: **87311075.3**

(22) Date of filing: **16.12.87**

Divisional application 92200453.6 filed on 16/12/87.

(54) **Optical recording card and method of producing the same.**

(30) Priority: **20.12.86 JP 304626/86**
**20.12.86 JP 304627/86**

(43) Date of publication of application:
**29.06.88 Bulletin 88/26**

(45) Publication of the grant of the patent:
**25.11.92 Bulletin 92/48**

(84) Designated Contracting States:
**AT BE CH DE FR GB IT LI NL SE**

(56) References cited:
**EP-A- 0 158 906**
**DE-A- 2 826 122**

**PATENT ABSTRACTS OF JAPAN, vol. 8, no. 132 (M-303)[1569], 20th June 1984; & JP-A-59 33 191**

**PATENT ABSTRACTS OF JAPAN, vol. 7, no. 153 (M-226)[1298], 5th July 1983; & JP-A-58 62 096**

(73) Proprietor: **Kyodo Printing Co., Ltd.**
**14-12, Koishikawa 4-chome Bunkyo-ku**
**Tokyo 112(JP)**

(72) Inventor: **Fukushima, Yoichi**
**14-12, 4-chome, Koishikawa Bunkyo-ku**
**Tokyo 112(JP)**
Inventor: **Fujita, Minoru**
**14-12, 4-chome, Koishikawa Bunkyo-ku**
**Tokyo 112(JP)**
Inventor: **Kakinuma, Yuji**
**14-12, 4-chome, Koishikawa Bunkyo-ku**
**Tokyo 112(JP)**

(74) Representative: **Charlton, Peter John et al**
**Elkington and Fife Prospect House 8 Pembroke Road**
**Sevenoaks, Kent TN13 1XR(GB)**

## Description

The present invention relates to an optical recording card and a method of producing the same and more particularly to a writable optical recording card (DRAW type optical recording card) and a method of producing the same.

In the recent years, a card in which various kinds of informations are recorded has been widely used as ID card, cash card or bank card.

This kind of card is required to record various kinds of informations such as individual data, data concerning issuance company or the like. In the earlier age, such kinds of informations were recorded using visual characters and symbols and in the later age they have been recorded using electrical signals which are produced with the aid of magnetism. However, in the case where magnetic recording medium is used, recorded informations are easy to be forged or falsified and moreover a quantity of informations to be recorded is limited. Accordingly, there is a need to taking adequate actions for preventing the recorded informations from being forged or falsified and dealing with the current increased quantity of informations to be recorded.

To this end, an optical recording card to which a laser technnique is applied has been lately developed. This optical recording card is such that it is provided with an information recording medium which has an optical reflection surface. Lately, a writable type (DRAW type) information recording medium has been required in addition to a conventional read only memory type (ROM type) information recording medium.

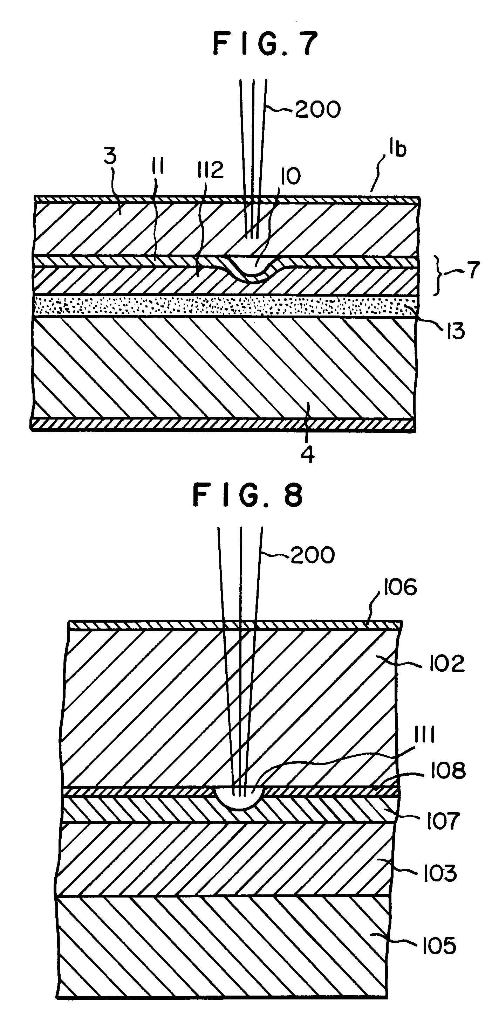

As shown in Fig. 8, a conventionsl DRAW type optical recording card 101 is so constructed that a nonfilamentary silver layer 108 is formed on a card front board 102, a black filamentary silver layer 107 is formed beneath the nonfilamentary silver layer 108 and a card rear board 103 is adhesively secured to the black filamentary layer 107. A surface hardening layer 106 is formed on the surface of the card fron board 102, which a protective layer 105 is formed on the surface of the card rear board 103.

A laser bean 200 for the purpose of writing is emitted from the surface hardening layer 106 side to melt the nonfilamentary silver layer 108, causing the black filamentary layer 107 to be exposed to the outside, whereby a pit 111 is formed in which informations are recorded. Reading of the recorded informations is achieved by discriminating "0" from "1" in dependence on an intensity ratio of reflected lights from the black filamentary silver layer 107 and the nonfilamentary silver layer 108.

However, the nonfilamentary silver layer used in the optical recording card as constructed in the above-described manner is expensive, has a low moisture resistance and moreover is inferior in stability for a long period of time.

Optical recording cards of this type are disclosed in European Patent Application No. 0158906, German Patent Application No. 2826122 and in Patent Abstracts of Japan vol. 8, no. 132 (M-303)[1569]. None of these cards has an optical recording card member consisting of a transparent figure image forming material.

On the other hand, as a technique for producing an optical recording card there is known such a technique that a separately prepared optical recording member is held between the card front board and the card rear board to assume a shape of card. In the case of the above-mentioned technique, the recording surface of the optical recording member has a low surface flatness. Further, there is a need of providing a base film for supporting the optical recording member. When a card is produced by employing the technique, the result is that produced cards fail to have an uniform thickness. Moreover, it is required that a card retaining mechanism is designed in other type. Consequently, a card reader becomes complicated in structure.

The present invention has been made with the foregoing background in mind and its object resides in providing an optical recording card in which data can be written and which can be easily produced at an inexpensive cost as well as a method of producing the optical recording card as mentioned above.

Accordingly, there is provided an optical recording card having an optical recording member is held between a card front board and a card rear board which are adhered to one another, characterised in that said optical recording member includes a coloured organic material layer and a transparent figure image forming material layer in the form of a layered structure, wherein the optical recording member is held between said card front board and said card rear board in such a manner that said coloured organic material layer is located on the light emitting side.

There is also provided a method of producing an optical recording card of the type including an optical recording member between a card front board and a card rear board which are adhesively secured to one another with the use of an adhesive, characterised in that said method comprises the steps of;

forming a coloured organic material layer in an optical recording member forming region located on one surface of said transparent card front board;

next, forming a transparent figure image forming material layer on said coloured organic material layer, and then,

adhesively securing said card rear board to said card front board with the use of an adhesive in such a manner as to cover said coloured organic material layer and said transparent figure image forming material layer.

The present invention will become readily apparent from reading of the following description which has been made in conjunction with the accompanying drawings.

The present invention will be illustrated in the accompanying drawings in which;

Fig. 1 is a perspective view illustrating an optical recording card in accordance with an embodiment of the present invention.

Fig. 2 is a fragmental enlarged sectional view of the optical recording card in Fig. 1.

Fig. 3 illustrates the steps of producing the optical recording card in Fig. 1.

Fig. 4 is a fragmental enlarged sectional view of the optical recording card in Fig. 1, particularly illustrating a state of writing of information in the optical recording card.

Fig. 5 is a fragmental enlarged sectional view of an optical recording card in accordance with other embodiment of the present invention.

Fig. 6 illustrates the steps of producing the optical recording card in Fig. 5.

Fig. 7 is a fragmental enlarged sectional view of the optical recording card in Fig. 5, particularly illustrating a state of writing of informations in the optical recording card, and

Fig. 8 is a fragmental enlarged sectional view of a conventional optical recording card.

Now, the present invention will be described in a greater detail hereunder with reference to the accompanying drawings which illustrate preferred embodiments thereof.

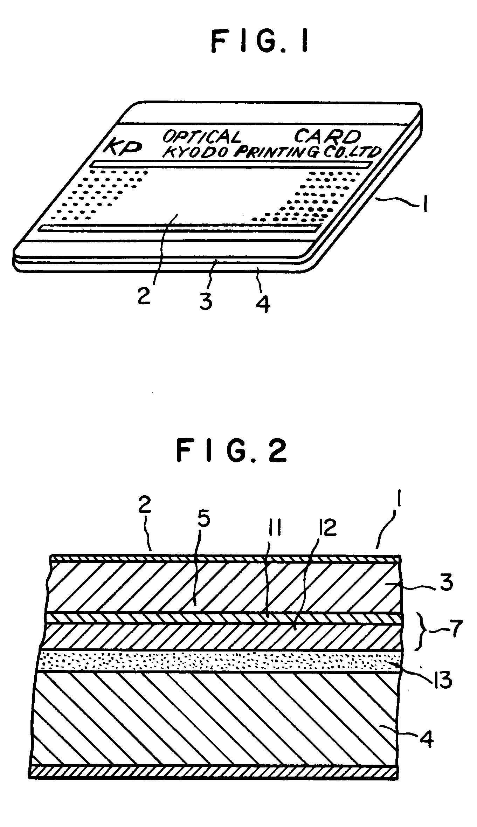

In Figs. 1 and 2, reference numeral 1 designates an optical recording card. A thickness of the optical recording card 1 is set to about 0.76 mm. The optical recording card 1 includes an optical recording section 2. The optical recording card 1 is so constructed that an optical recording member 7 is formed in an optical recording member forming region 5 located inwardly of a card front board 3 and moreover a card rear board 4 is adhesively secured to the optical recording member 7 with an adhesive layer 13 interposed therebetween in such a manner as to cover the optical recording member 7.

The card rear board 4 is intended to assure a strength of the optical recording card 1, and a plate of glass or synthetic resin such as acrylic resin, epoxy resin, polyester resin, polyvinyl chloride resin, polysulfon resin, polyethersulfon resin, polycarbonate resin or the like is employable as material constituting the card rear board 4.

The card front board 3 has a thickness of about 0.4 mm and it is constituted by material having an excellent light permeability such as glass or transparent resin such as polycarbonate resin, acrylic resin, epoxy resin, polyester resin, polyvinyl chloride resin, polysulfon resin, polyethersulfon resin, polycarbonate resin or the like or at least the optical recording member forming region 5 corresponding to the optical recording section 2 has a light permeability.

The optical recording member 7 is constituted by a colored organic material layer 11 and an aluminium deposited layer 12 to build a layered structure. The colored organic material layer 11 is formed on the card front board 3 to have a thickness in the range of 300 angstroms to 10 microns. As material constituting the colored organic material layer 11, for instance, a solution which is prepared as dyestuff adapted to absorb light having a wave length of about 830 mm by dissolving NK2014 or NK125(both of them being produced by Nippon Kanko-Shikiso Kenkyusho Co., Ltd.), IR-820(produced by Nippon Kayaku Co., Ltd.) or the like in a mixture of cyclohexanone and dichloromethane having a mixing ratio of 1 : 1 by 1 % by weight is employable.

The aluminium deposited layer 12 is formed on the colored organic material layer 11 by a process of vaccum depositing to have a thickness less than 100 nm (1000 angstroms). Further, a preformat can be added to the optical recording member 7 by a process of dyeing.

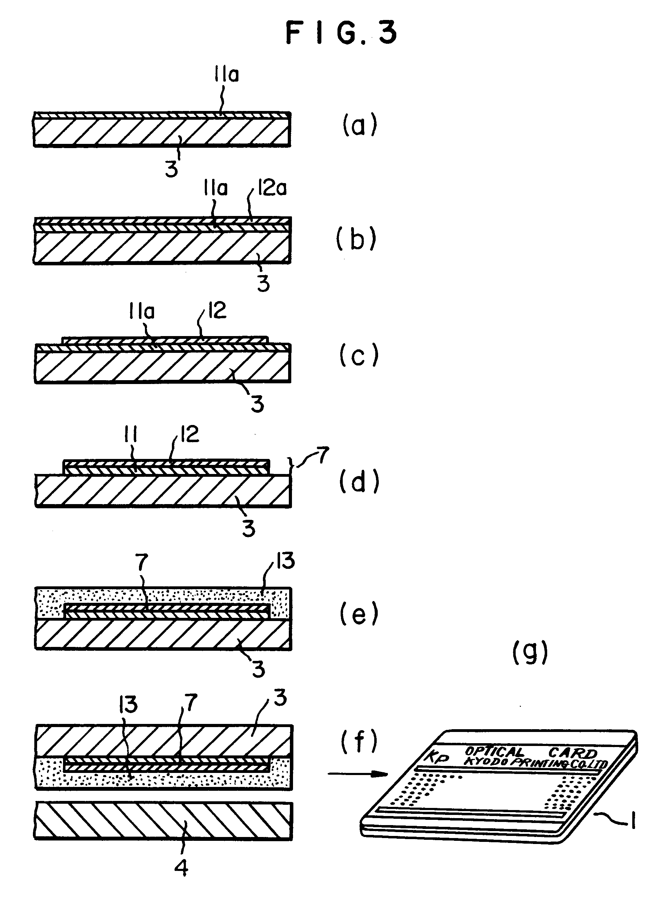

Next, description will be made below with reference to Fig. 3 as to a method of producing the optical recording card as constructed in the above-described manner.

First, a colored organic material 11a is coated on the high surface flatness card front board 3 by spin coating or the like process. Incidentally, a pregroup address or the like may be previously formed on the high surface flatness card front board 3 by a process of die pressing or with the use of ultraviolet ray hardenable resin, as required. Further, a preformat may be previously formed on the high surface flatness card front board 3 by printing or the like process. As colored organic material 11a, a solusion which is prepared by dissolving NK2014 or NK125 (both of them being produced by Nippon Kanko-Shikiso kenkyusho Co., Ltd.), IR-820 (produced by Nippon Kayaku Co., Ltd.) or the like in a mixture of cyclohexanone and dichloromethane having a mixing ratio of 1 : 1 by 1 % by weight is used by a process of coating and after completion of the coating it is subjected to drying. After it is dried, it has a thickness of about 50 nm (500 angstroms) (see Fig. 3(a)).

Next, a vaporized aluminum 12a is deposited on the colored organic material 11a by a process of vacuum depositing (see Fig. 3(b)). After completion of the depositing, it has a thickness of about 50 nm (500 angstroms).

Next, the vapourized aluminum 12a is removed by patterning with the exception of a part corresponding to the optical recording member forming region 5. This causes the aluminum deposited layer 12 to be formed (see Fig. 3(c)).

Next, the colored organic material 11a is dissolved by using the aluminum deposited layer 12 as a mask whereby the colored organic material layer 11 is formed.

The optical recording member 7 is completed by way of the steps as mentioned above (see Fig. 3(d)).

Next, an adhesive layer 13 is coated from the above of the optical recording member 7 (see Fig. 3(e)) and the card rear board 4 is then adhesively secured to the optical recording member 7 with the adhesive layer 13 interposed therebetween (see Fig. 3(f)).

Finally, the completed layered structure is punched to assume a predetermined shape as a card whereby the required optical recording card 1 is completed (Fig. 3(g)).

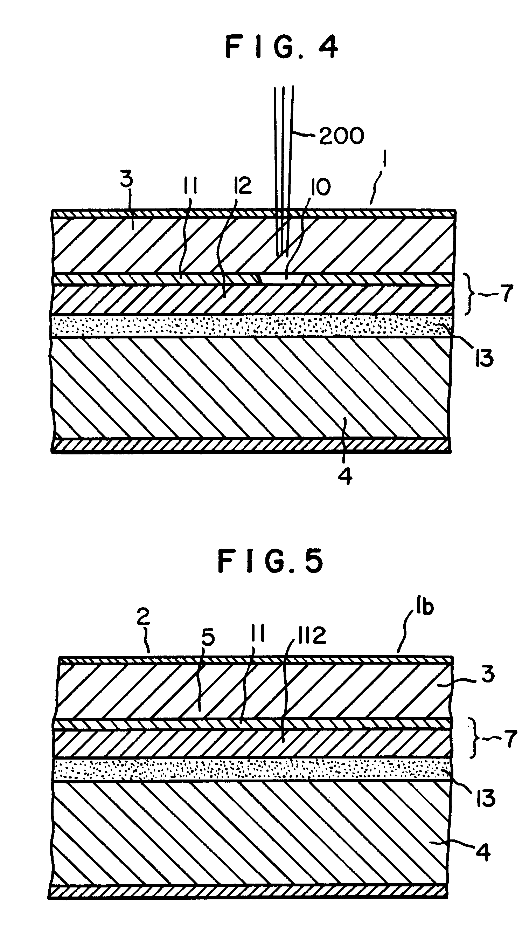

When optical informations are written in the optical recording card 1 as constructed in the above described manner, as shown in Fig. 4, a laser beam is emitted onto the colored organic material layer 11 from the above of the card front board 3 of the optical recording card 1. This causes material in a part of the colored organic material layer 11 onto which the laser beam has been emitted to the molten whereby a part of the aluminum deposited layer 12 is exposed to the outside to form a pit 10. Reading of the pit 10 is achieved by presence of absence of a reflected light from the colored organic material layer 11 and the aluminum deposited layer 12 or by a degree of intensity of the reflected light.

As will be apparent from the above description, the optical recording card of the present invention is inexpensive, and moreover it is easy to produce the optical recording member, because the colored organic material layer and the aluminum deposited layer can be formed by employing a well-established method in relation to a conventional thin film forming technique. Thus, the optical recording member can be easily produced and therefore the optical recording card of the invention itself can be easily produced at an inexpensive cost.

Further, since the optical recording member is adhesively enveloped between the card front board and the card rear board with the aid of an adhesive, it can maintain stability for a long period of time.

Moreover, since the optical recording member is formed directly on the high surface flatness card front board, the recording surface of the optical recording member is excellent in surface flatness and a performance of adhesion of the optical recording member to the card front surface is excellent too.

Next, description will be made below as to an optical recording card in accordance with another embodiment of the invention.

As shown in Fig. 5, an optical recording member 7 is constituted by a colored organic material layer 11 and a transparent figure image forming material layer 112 to build a layered structure. The colored organic material layer 11 is formed on the high surface flatness card front board 3 to have a thickness in the range of 300 angstroms to 10 microns. For instance, a solution which is prepared by dissolving NK2014 or NK125 (both of them being produced by Nippon Kanko-Shikiso Kenkyusho Co., Ltd.), IR-820 (produced by Nippon Kayaku Co., Ltd.) or the like in a mixture of cyclohexanone and dichloromethane having a mixing ratio of 1 : 1 by 1 % by weight is employable as material constituting the colored organic material layer 11.

The transparent figure image forming material layer 112 is formed on the colored organic material layer 11 to have a thickness in the range of 0.1 to 50 microns. For instance, G-90 (produced by Tokyo Ohka kogyo Co., Ltd.), gelatin, PVA or the like are employable as transparent figure image building material. Incidentally, a plurality of optical recording members 7 may be formed one above another.

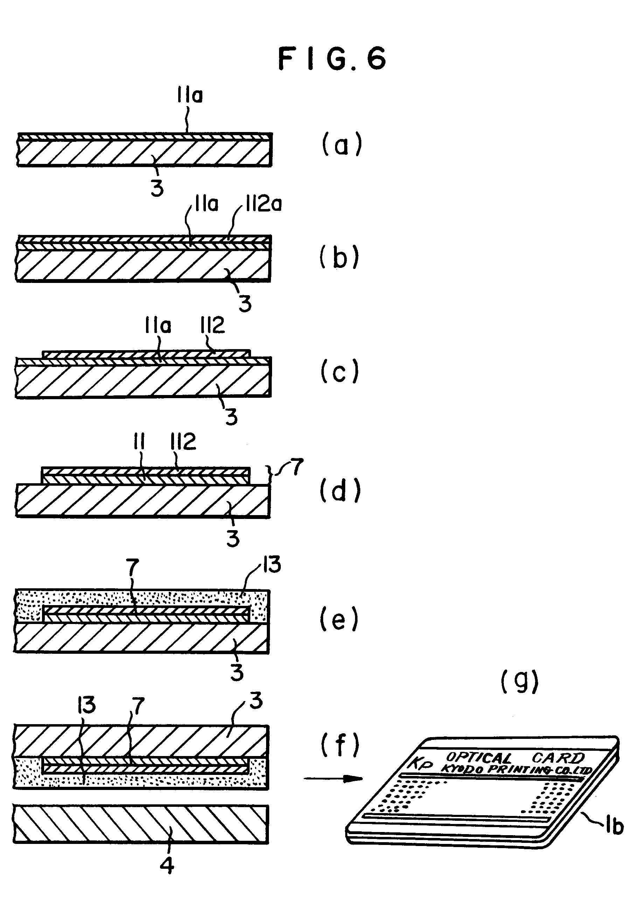

Next, description will be made below the reference to Fig. 6 as to a method of producing the optical recording card as constructed in the above-described manner.

First, a colored organic material 11a is coated on the high surface flatness card front board 3 by a process of spin-coating or the like. As colored organic material 11a, a solution which is prepared by dissolving NK2014 or NK125 (both of them being produced by Nippon Kanko-Shikiso Kenkyusho Co., Ltd.), IR-820(produced by Nippon Kayaku Co., Ltd.) or the like in a mixture of cyclohexanone and dichloromethane having a mixing ratio of 1 : 1 by 1 % by weight is used by a process of coating. After completion of the coating, it is subjected to drying. After it is dried, it has a thickness of about 50 nm (500 angstroms) (see Fig. 6(a)).

Next, a transparent figure image building material 112a is coated on the colored organic material 11a by a process of spin-coating (see Fig. 6-(b)). As transparent figure image building material 112a, a mixture comprising 10 parts of G-90 (produced by Tokyo Ohka kogyo Co., Ltd.) and 1 part of 1.0 %, ammonium dichromate is employable. After completion of the coating, it is subjected to drying. After it is dried, it has a thickness of about 0.4 micron.

Next, the transparent figure image building material 112a is removed by patterning with the exception of a part corresponding to the optical recording member 7 forming region 6. This causes a transparent figure image forming material layer 112 to be formed (see Fig. 6(c)).

Next, a colored organic material layer 11 is formed by dissolving the colored organic material 11a by using the transparent figure image forming material layer 112 as a mask.

An optical recording member 7 is completed by way of the steps as described above (see Fig. 6(d)).

Next, an adhesive layer 13 is coated from the above of the optical recording member 7 (see Fig. 6(e)) and the card rear board 4 is adhesively secured to the optical recording member 7 with the adhesive layer 13 interposed therebetween (see Fig. 6(f)).

Finally, the completed layered structure is punched to assume a predetermined shape as a card whereby the optical recording card 1 is completed (see Fig. 6(g)).

When optical informations are written onto the optical recording card 11 as constructed in the above-described manner, as shown in Fig. 7, a laser beam is emitted onto the colored organic material layer 11 from the above of the card front board 3 of the optical recording card 1. This causes a part of the colored organic material layer 11 onto which the laser beam has been emitted to be deformed. At the same time, this deformation is absorbed by dissolution of the transparent figure image forming material layer 112 whereby a pit 10 is formed by concavities and convexities which are representative of the surface state of the colored organic material layer 11. Reading of the pit 10 is achieved by presence of absence of reflected light from the concavities and convexities representative of the surface state of the colored organic material layer 11 or a degree of intensity of the reflected light.

As will be apparent from the above description, the optical recording card of the invention is inexpensive, and the colored organic material layer and the transparent figure image forming material layer can be formed by employing a well-established method in relation to a conventional thin film forming technique. Thus, the optical recording member can be easily produced and therefore the optical recording card of the invention itself can be easily produced at an inexpensive cost.

Further, since the optical recording member is adhesively enveloped between the card front board and the card rear board with the use of an adhesive, it has stability for a long period of time.

Moreover, since the the optical recording member is formed directly on the high surface flatness card front board, the recording surface of the optical recording member is excellent in surface flatness and an intensity of adhesion of the optical recording member to the card front board is excellent too.

## Claims

1. An optical recording card (1) having an optical recording member (7) is held between a card front board (3) and a card rear board (4) which are adhered to one another, characterised in that said optical recording member (7) includes a coloured organic material layer (11) and a transparent figure image forming material layer (112) in the form of a layered structure, wherein the optical recording member (7) is held between said card front board (3) and said card rear board (4) in such a manner that said coloured organic material layer (11) is located on the light emitting side.

2. The optical recording card (1) of claim 1 wherein said card front board (3) is constituted by material having an excellent light permeability such as glass or transparent resin such as acrylic resin, epoxy resin, polyester resin, polyvinyl chloride resin, polysulfon resin, polyethersulfon resin or polycarbonate resin.

3. The optical recording card (1) of claim 1 or 2 wherein said card rear board (4) comprises a plate made of glass or synthetic resin such as acrylic resin, epoxy resin, polyester resin, polyvinyl chloride resin, polysulfon resin, polyethersulfon resin or polycarbonate resin.

4. The optical recording card (1) of any preceding claim wherein said coloured organic material has a thickness in the range of 30 nm (300 angstroms) to 10 microns.

5. The optical recording card (1) of any preceding claim wherein said transparent figure image forming material layer (112) has a thickness in the range of 0.1 to 5.0 microns.

6. A method of producing an optical recording card (1) of the type including an optical recording member (7) between a card front board (3) and a card rear board (4) which are adhesively secured to one another with the use of an adhesive, characterised in that said method comprises the steps of;

    forming a coloured organic material layer (11) in an optical recording member forming region (5) located on one surface of said transparent card front board (3);

next, forming a transparent figure image forming material layer (112) on said coloured organic material layer (11), and then,

adhesively securing said card rear board (4) to said card front board (3) with the use of an adhesive in such a manner as to cover said coloured organic material layer (11) and said transparent figure image forming material layer (112).

7. The method of claim 6 wherein said card front board (3) is constituted by material having an excellent light permeability such as glass or transparent resin such as acrylic resin, epoxy resin, polyester resin, polyvinyl chloride resin, polysulfon resin, polyethersulfon resin or polycarbonate resin.

8. The method of claim 6 or 7 wherein said card rear board (4) comprises a plate made of glass or synthetic resin such as acrylic resin, epoxy resin, polyester resin, polyvinyl chloride resin, polysulfon resin, polyethersulfon resin or polycarbonate resin.

9. The method of one of claims 6 to 8 wherein said coloured organic material layer (11) is coated by a process of spin coating, roll coating or the like and a dried thin film thereof has a thickness in the range of 30 nm (300 angstroms) to 10 microns.

10. The method of one of claims 6 to 9 wherein said transparent figure image forming material layer (112) is coated by a process of spin coating, roll coating or the like and a dried film thereof has a thickness in the range of 0.1 to 5.0 microns.

## Patentansprüche

1. Karte für optische Aufzeichnung (1), die ein optisches Aufzeichnungsglied (7) aufweist, gehalten zwischen einer Kartenfrontseite (3) und einer Kartenrückseite (4), die aneinander geklebt sind, dadurch gekennzeichnet, daß das genannte optische Aufzeichnungsglied (7) eine gefärbte Schicht (11) aus organischem Material aufweist und eine transparente Schicht (112) aus Zeichen bzw. Strukturen abbildendem Material in Form einer Schichtstruktur, worin das optische Aufzeichnungsglied (7) zwischen der genannten Kartenfrontseite (3) und der genannten Kartenrückseite (4) auf solche Weise gehalten wird, daß die genannte gefärbte Schicht aus organischem Material (11) auf der lichtemittierenden Seite angeordnet ist.

2. Karte für optische Aufzeichnung (1) nach Anspruch 1, worin die genannte Kartenfrontseite (3) aus Material gebildet ist, das eine ausgezeichnete Lichtdurchlässigkeit aufweist, wie Glas oder transparentes Harz wie Acrylharz, Epoxydharz, Polyesterharz, Polyvinylchloridharz, Polysulfonharz, Polyethersulfonharz oder Polycarbonatharz.

3. Karte für optische Aufzeichnung (1) nach Anspruch 1 oder 2, worin die genannte Kartenrückseite (4) eine Platte aufweist, die aus Glas oder Syntheseharz gebildet ist, wie Acrylharz, Epoxydharz, Polyesterharz, Polyvinylchloridharz, Polysulfonharz, Polyethersulfonharz oder Polycarbonatharz.

4. Karte für optische Aufzeichnung (1) nach einem der vorhergehenden Ansprüche, worin das genannte gefärbte organische Material eine Dicke im Bereich von 30 nm (300 Angström) bis 10 Micron aufweist.

5. Karte für optische Aufzeichnung (1) nach einem der vorhergehenden Ansprüche, worin die genannte transparente Schicht (112) aus Zeichen bzw. Strukturen abbildendem Material eine Dicke im Bereich von 0,1 bis 5,0 Micron aufweist.

6. Verfahren zur Herstellung einer Karte für optische Aufzeichnung (1) von dem Typ, der ein optisches Aufzeichnungsglied (7) zwischen einer Kartenfrontseite (3) und einer Kartenrückseite (4) aufweist, die unter Verwendung eines Klebstoffs klebend miteinander verbunden werden, dadurch gekennzeichnet, daß das genannte Verfahren die Schritte umfaßt:
Bildung einer gefärbten Schicht (11) aus organischem Material in einem ein optisches Aufzeichnungsglied bildenden Bereich (5), der auf einer Oberfläche der genannten transparenten Kartenfrontseite (3) angeordnet ist;
danach Bildung einer transparenten Schicht (112) aus Zeichen bzw. Strukturen abbildendem Material auf der genannten Schicht (11) aus organischem Material und dann
Verbinden der genannten Kartenrückseite (4) mit der genannten Kartenfrontseite (3) durch Kleben unter Verwendung eines Klebstoffes, so daß die genannte gefärbte Schicht (11) aus organischem Material und die genannte transparente Schicht (112) aus Zeichen bzw. Strukturen abbildendem Material bedeckt wird.

7. Verfahren nach Anspruch 6, worin die genannte Kartenfrontseite (3) aus Material, das eine ausgezeichnete Lichtdurchlässigkeit aufweist, wie Glas oder transparentes Harz wie Acryl-harz, Epoxydharz, Polyesterharz, Polyvinyl-chloridharz, Polysulfonharz, Polyethersulfon-harz oder Polycarbonatharz, gebildet wird.

8. Verfahren nach Anspruch 6 oder 7, worin die genannte Kartenrückseite (4) eine Platte aufweist, die aus Glas oder Syntheseharz gebildet ist, wie Acrylharz, Epoxydharz, Polyesterharz, Polyvinylchloridharz, Polysulfonharz, Polyethersulfonharz oder Polycarbonatharz.

9. Verfahren nach einem der Ansprüche 6 bis 8, worin die genannte gefärbte Schicht (11) aus organischem Material nach einem Verfahren von Spinnbeschichtung, Rollbe-Schichtung oder dergleichen beschichtet wird und ein getrockneter dünner Film davon eine Dicke im Bereich von 30 nm (300 Angström) bis 10 Micron aufweist.

10. Verfahren nach einem der Ansprüche 6 bis 9, worin die genannte transparente Schicht (112) aus Zeichen bzw. Strukturen abbildendem Material nach einem Verfahren von Spinnbeschichtung, Rollbeschichtung oder dergleichen beschichtet wird und ein getrockneter Film davon eine Dicke im Bereich von 0,1 bis 5,0 Micron aufweist.

**Revendications**

1. Une carte d'enregistrement optique (1) ayant un membre d'enregistrement optique (7) est maintenue entre une plaque avant de la carte (3) et une plaque arrière de la carte (4) qu'on fait adhérer l'une à l'autre, caractérisée en ce que ledit membre d'enregistrement optique (7) inclut une couche de matériau organique coloré (11) et une couche de matériau transparent formant une image de figure (112) sous la forme d'une structure en couches, dans laquelle le membre d'enregistrement optique (7) est maintenu entre ladite plaque avant de la carte (3) et ladite plaque arrière de la carte (4) d'une manière telle que ladite couche de matériau organique coloré (11) est située du côté de l'émission de la lumière.

2. La carte d'enregistrement optique (1) de la revendication 1 dans laquelle ladite plaque avant de la carte (3) est constituée par un matériau ayant une excellente perméabilité à la lumière, tel que du verre ou une résine transparente comme une résine acrylique, une résine époxy, une résine polyester, une résine de chlorure de polyvinyle, une résine de polysulfone, une résine de polyéthersulfone ou une résine de polycarbonate.

3. La carte d'enregistrement optique (1) de la revendication 1 ou 2 dans laquelle ladite plaque arrière de la carte (4) comprend une plaque faite en verre ou en une résine synthétique, telle qu'une résine acrylique, une résine époxy, une résine polyester, une résine de chlorure de polyvinyle, une résine de polysulfone, une résine de polyéthersulfone ou une résine de polycarbonate.

4. La carte d'enregistrement optique (1) de l'une quelconque des revendications précédentes dans laquelle ledit matériau organique coloré a une épaisseur dans un intervalle compris entre 30 nm (300 angströms) et 10 $\mu$m (10 mi-crons).

5. La carte d'enregistrement optique (1) de l'une quelconque des revendications précédentes dans laquelle ladite couche de matériau transparent formant une image de figure (112) a une épaisseur dans un intervalle compris entre 0,1 et 5,0 $\mu$m (microns).

6. Une méthode de production d'une carte d'enregistrement optique (1) d'un type incluant un membre d'enregistrement optique (7) entre une plaque avant de la carte (3) et une plaque arrière de la carte (4) qui sont fixées adhésivement l'une à l'autre au moyen d'un adhésif, caractérisée en ce que ladite méthode comprend les étapes de :
   constituer une couche de matériau organique coloré (11) dans une région formant le membre d'enregistrement optique (5) située sur une face de ladite plaque avant transparente de la carte (3);
   ensuite, constituer une couche de matériau transparent formant une image de figure (112) sur ladite couche de matériau organique coloré (11) et ensuite,
   fixer adhésivement ladite plaque arrière de la carte (4) à ladite plaque avant de la carte (3) à l'aide d'un adhésif d'une manière à recouvrir ladite couche de matériau organique coloré (11) et ladite couche de matériau transparent formant une image de figure (112).

7. La méthode de la revendication 6 dans laquelle ladite plaque avant de la carte (3) est constituée par un matériau ayant une excellente perméabilité à la lumière, tel que du verre ou une résine transparente comme une résine acrylique, une résine époxy, une résine polyester, une résine de chlorure de polyvinyle, une résine de polysulfone, une résine de polyéthersulfone ou une résine de polycarbonate.

8. La méthode de la revendication 6 ou 7 dans laquelle ladite plaque arrière de la carte (4) comprend une plaque faite en verre ou en une résine synthétique, telle qu'une résine acrylique, une résine époxy, une résine polyester, une résine de chlorure de polyvinyle, une résine de polysulfone, une résine de polyéthersulfone ou une résine de polycarbonate.

9. La méthode de l'une des revendications 6 à 8 dans laquelle on enduit ladite couche de matériau organique coloré (11), selon un procédé de vernis par filage, de vernis au rouleau ou similaire, et une pellicule fine sèche de celle-ci a une épaisseur dans un intervalle compris entre 30 nm (300 angströms) et 10 $\mu$m (10 microns).

10. La méthode de l'une des revendications 6 à 9 dans laquelle on enduit ladite couche de matériau transparent formant une image de figure (112), selon un procédé de vernis par filage, de vernis au rouleau ou similaire ,et une pellicule séchée de celle-ci a une épaisseur dans un intervalle compris entre 0,1 et 5,0 $\mu$m (microns).

# F I G. 1

# F I G. 2

# F I G. 3

(a)

(b)

(c)

(d)

(e)

(f)

(g)

# F I G. 4

# F I G. 5

# F I G. 6

(a)

(b)

(c)

(d)

(e)

(f)

(g)

# FIG. 7

# FIG. 8